# EUROPEAN PATENT SPECIFICATION

(11) **EP 3 844 989 B1**
(45) Date of publication and mention of the grant of the patent: **12.08.2026**
(21) Application number: 18931781.1
(22) Date of filing: 31.08.2018
(51) Int. Cl.: H04W 8/08, H04W 88/06, H04W 28/02, H04W 28/10, H04W 36/00, H04W 12/08, H04W 36/14, H04W 28/08, H04W 12/106, H04W 84/12

(54) **ANCHORLESS AND MULTI-RAT MOBILITY AND ROAMING MANAGEMENT**
ANKERLOSE UND MULTI-RAT-MOBILITÄTS- UND ROAMINGVERWALTUNG
GESTION DE MOBILITÉ ET D'ITINÉRANCE SANS ANCRAGE ET MULTI-RAT

(43) Date of publication of application: 07.07.2021
(73) Proprietor: Cisco Technology, Inc., San Jose, California 95134-1706 (US)
(72) Inventor: AUGÉ, Jordan, 78210 Saint-Cyr-L'Ecole (FR); ENGUEHARD, Marcel Paul Sosthène, 75017 Paris (FR); SAMAIN, Jacques Olivier, 75011 Paris (FR); COMPAGNO, Alberto, 92130 Issy-Les-Moulineaux (FR); PAPALINI, Michele, 92130 Issy Les Moulineaux (FR)
(74) Representative: Kilburn & Strode LLP
(86) International application number: PCT/US2018/049181
(87) International publication number: WO 2020/046383

(56) References cited:
- WO-A1-2016/202363
- US-A1- 2007 204 048
- US-A1- 2013 031 271
- US-A1- 2014 307 550
- US-A1- 2015 038 142
- US-A1- 2015 078 359
- US-A1- 2015 111 569
- US-A1- 2016 183 129
- US-A1- 2016 234 124
- US-A1- 2017 034 041
- US-A1- 2017 195 908
- SOLIS IGNACIO ET AL: "Anchor-Less Producer Mobility in ICN", PROCEEDINGS OF THE 2ND INTERNATIONAL CONFERENCE ON INFORMATION-CENTRIC NETWORKING, ICN '15, 30 September 2015 (2015-09-30), New York, New York, USA, pages 189 - 190, XP055813743, ISBN: 978-1-4503-3855-4, Retrieved from the Internet <URL:http://conferences2.sigcomm.org/acm-icn/2015/proceedings/p189-auge.pdf> DOI: 10.1145/2810156.2812601
- COMPAGNO ALBERTO ET AL: "Secure Producer Mobility in Information-Centric Network", 26 September 2017 (2017-09-26), pages 7, XP055900530, Retrieved from the Internet <URL:https://dl.acm.org/doi/pdf/10.1145/3125719.3125725> DOI: 10.1145/3125719.3125725
- PAILLISSE JORDI ET AL: "IPchain: Securing IP Prefix Allocation and Delegation with Blockchain", 2018 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 30 July 2018 (2018-07-30), pages 1236 - 1243, XP033556302, DOI: 10.1109/CYBERMATICS_2018.2018.00218
- QUINTERO ET AL.: "A mobility management model based on users' mobility profiles for IPv6 networks", SCIENCEDIRECT, August 2006 (2006-08-01), XP027943887, Retrieved from the Internet <URL:http://www.larim.polymtl.ca/pdf/51.pdf> [retrieved on 20181024]

## Description

### TECHNICAL FIELD

The present technology pertains in general to anchorless management of device mobility across one or more radio access technologies.

### BACKGROUND

There is an ongoing effort in both the Internet Engineering Task Force (IETF) and the 3^{rd} Generation Partnership Project (3GPP) to identify a set of candidate proposals in order to unify, simplify and enhance mobile networks. One particularly challenging objective is to offer anchorless management solutions working across multiple radio access technologies (RATs).

One proposed scheme includes Identifier/Locator (Id/Loc) split solutions, which remove the need for anchors due to the overloading of Internet Protocol (IP) addresses as being considered locators and identifiers at the same time. Other proposed solutions are based on Information Centric Networking (ICN) that forward packets using names instead of locators. There is also a Hybrid ICN (HICN) that proposes an incremental deployment strategy within IP, by mapping names to IP addresses. HICN allows anchorless and seamless mobility even in presence of multipath, multi-homed sources, or even multiple sources sharing the same identifier.

Using identifiers avoids the employment of tunnels and anchors for handling mobility. However, they introduce additional challenges for supporting multiple radios. While in an enterprise context, a single authority (e.g., Application and Mobility Management Function (AMF) in the 5^{th} Generation (5G) context) manages identifiers (and prefixes) assignment, multiRAT solutions are likely to involve multiple authorities. In other words, scenarios involving mobility across multiple RATs require making a prefix available in a third-party network, which is challenging.

SOLIS IGNACIO ET AL, "Anchor-Less Producer Mobility in ICN", DOI: 10.1145/2810156.2812601, describes, according to its abstract, an anchor-less approach to manage producer mobility via Interest Updates/Notifications in the data plane, even in presence of latency-sensitive applications. This document details the different operations triggered by producer movements and positions its contribution in the context of existing alternatives, by discussing user performance and network metrics.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates an example multi-RAT setting, according to an aspect of the present disclosure;
FIG. 2 illustrates an example method of anchorless mobility management, according to an aspect of the present disclosure;
FIG. 3 illustrates an example authentication process for anchorless mobility across multiple networks, according to an aspect of the present disclosure;
FIG. 4 illustrates computing system architecture for use in setting of FIG. 1, according to an aspect of the present disclosure; and
FIG. 5 illustrates an example network device suitable for performing switching, routing, load balancing, and other networking operations, according to an aspect of the present disclosure.

### SUMMARY

Various example embodiments of the disclosure are discussed in detail below. While specific implementations are discussed, it should be understood that this is done for illustration purposes only. A person skilled in the relevant art will recognize that other components and configurations may be used without parting from the scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

**The** invention to which this European application relates is defined in the appended claims.

### DETAILED DESCRIPTION

The disclosed technology addresses the need in the art for an anchorless (a distributed) and lightweight solution to mobility of devices across multiple different domains or networks that operate based on same or different RATs without requiring additional infrastructure to handle the mobility.

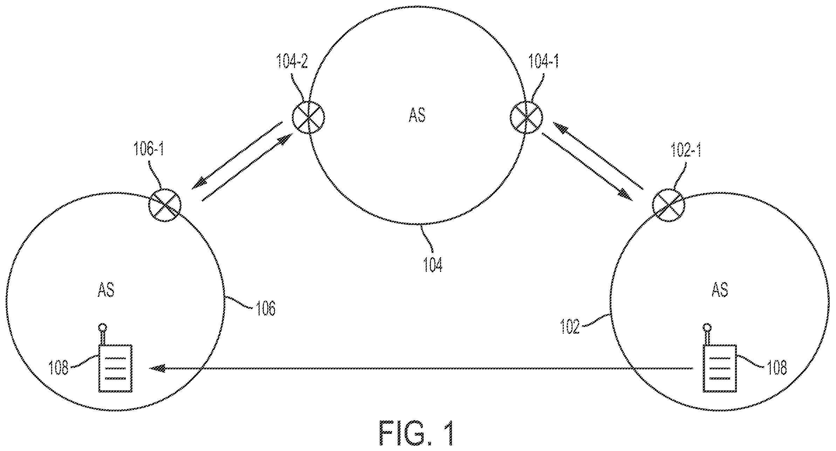

FIG. 1 illustrates an example multi-RAT setting, according to an aspect of the present disclosure. As shown in FIG. 1A, setting 100 includes 3 Autonomous Systems (AS) 102, 104 and 106. Each of the AS 102, 104 and 106 may operate according to a different radio access technology, examples of which include, but are not limited to, 3G, 4^{th} Generation (4G), 5^{th} Generation (5G), WiFi, Bluetooth, Worldwide Interoperability for Microwave Access (WiMAX), Long Term Evolution (LTE), Global System for Mobile Communications (GSM) and/or any other communication techniques known, or to be developed. While setting 100 illustrates only 3 ASs 102, 104 and 106, the present disclosure is not limited thereto. For example, setting 100 can include two ASs (e.g., only AS 102 and AS 106), four ASs, and/or any other number of ASs. In one example, AS 102, 104 and 106 are independent from one another. In one example, any two or more of AS 102, 104 and 106 may operate based on the same radio access technology while belonging to different domains (e.g., WiFi in multiple different domains).

Any one of ASs 102, 104 and 106 may have various known or to be developed components for operations thereof. For example, when AS 102 is a 5G network, AS 102 can include one or more global nodeBs (gNBs), small cell base stations, a core network including components for authentication, billing, etc. (such as an Application and Mobility Management function (AMF), etc.). In another example, when AS 104 is an enterprise WiFi network, AS 104 can include known or to be developed components such as a DNA fabric that can include routers, edge nodes, a mapping server, a Dynamic Host Configuration Protocol (DHCP) server, an Identity Service Engine (ISE), etc.

In one example, each of the ASs 102, 104 and 106 can have at least one border router configured with Boarder Gateway Protocol (BGP) for directing traffic across a multiple ASs such as ASs 102, 104 and 106. In one example, each AS can have a designated BGP router for directing traffic to another network. For example, as shown in FIG. 1, AS 102 can have BGP router 102-1 designated as BGP router for steering traffic to AS 104, AS 104 can have routers 104-1 and 104-2 as BGP routers, with BGP router 104-1 used for steering traffic to and from AS 102 and BGP router 104-2 used for steering traffic to and from AS 106. Finally, AS 106 can have BGP 106-1 for steering traffic to and from AS 104.

In one example, each one of ASs 102, 104 and 106 can have a single BGP router for steering traffic to and from devices in another one of ASs 102, 104 and 106.

Each of ASs 102, 104 and 106 provides network (Internet) connectivity for authorized/authenticated devices within a given geographical location. Furthermore, the respective covered geographical area of each AS may overlap (partially or completely) with covered geographical area of other ASs.

Furthermore, each of ASs 102, 104 and 106 may deploy Information Centric Network (ICN) or Hybrid ICN (HICN) technology (software) to enhance user-to content communication, improve mobility, storage and security in their respective network. For example, each AS 102, 104 and 106 can deploy ICN or HICN technology developed by Cisco Technology, Inc. of San Jose, CA.

Setting 100 further depicts device 108. Device 108 may be any known or to developed electronic equipment capable of establishing a wireless connection to any one of ASs 102, 104 or 106. Examples of device 108 can include, but are not limited to, a smart phone, laptops, a tablet, an Internet of Things (IoT) device, a smart watch, etc. Mobile device 108 can include any known or to be developed interface for establishing a connection to each AS 102, 104 and 106 according to the respective underlying technology (e.g., can have a WiFi interface, an LTE interface, etc.).

While FIG. 1 illustrates a single device 108, the present disclosure is not limited thereto and may include any number of devices that may move across ASs 102, 104 and/106.

For purposes of the present disclosure, an assumption is made that device 108 is originally attached/connected to AS 102 (home AS 102) and subsequently moves to establish a connection with AS 104 and ultimately AS 106 (destination AS 106). In another example, device 108 is originally attached/connected to home AS 102 and moves directly to destination AS 106. In another example, device 108 is originally attached/connected to AS 102 and moves through several intermediary nodes such as AS 104 before moving ultimately to destination AS 106. Such a move, which can be physical (e.g., from one location covered by AS 102 to another location covered by AS 104), need not necessary involve a physical movement of device 108. Instead, it can simply be that device 108 switches from using its LTE interface with AS 102, for example, to switching its WiFi interface to establish a WiFi connection with AS 104, for example. In another example, such a move can be that device 108 remains attached to its LTE network but switches from one available WiFi connection in the same area to another (e.g., when one WiFi connection becomes unavailable).

One aspect of the present disclosure provides a two-step solution for anchorless mobility management of device 108 that has moved across multiple domains that operate based on same or different RATs via AS 102, 104 and 106. The first of the two steps focuses on inter-domain mobility, while the second step focuses on intra-domain mobility of device 108.

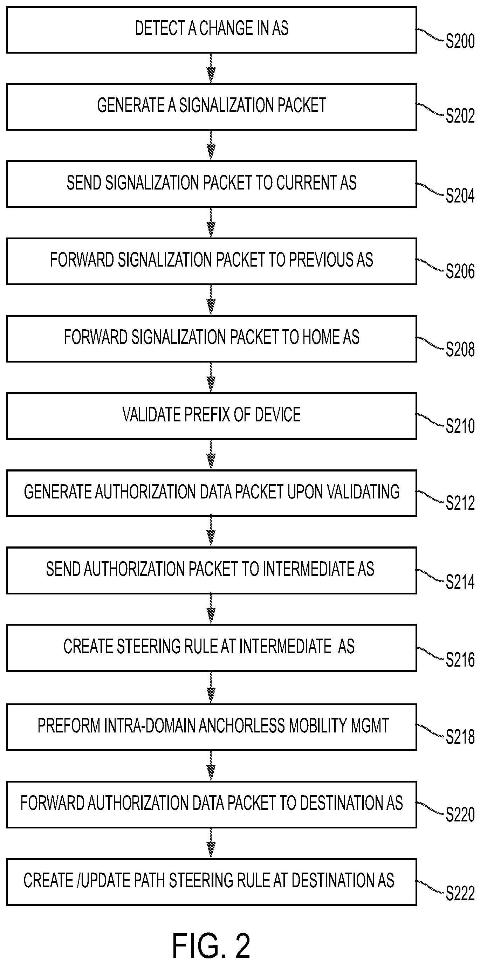

FIG. 2 illustrates an example method of anchorless mobility management, according to an aspect of the present disclosure. Examples of the mobility management method of FIG. 2 involve multiple different entities including device 108, home AS 102, destination AS 106 and intermediate AS 104. However, it will be understood that each of these components have one or more processors configured to execute computer-readable instructions corresponding to ICN or HICN described above to carry out the process of FIG. 2.

As noted above, an assumption is made that device 108 was originally attached to home AS 102 (an example of which can be device 108's cellular service provider), then moved to intermediate AS 104 (an example of which can be a WiFi service provider, an enterprise network as an internet service provider) and finally to destination AS 106 (an example of which can be another cellular service provider on which device 108 can roam).

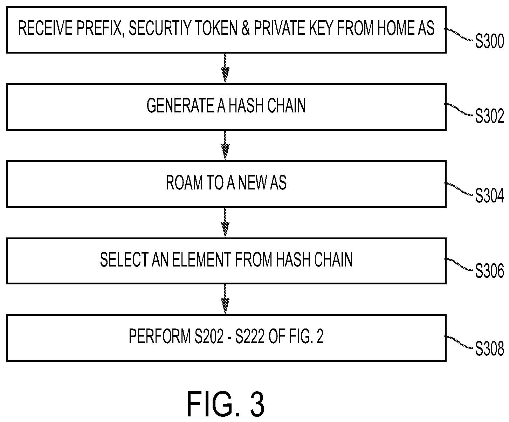

At S200, device 108 determines (detects) a change of AS (a change of domain) and attaches to destination AS 106 through known and/or to be developed authentication/attachment methods (assuming device 108 had previously switched from home AS 102 to intermediate AS 104 and now to destination AS 106). Security aspects of handling the attachment and validating device 108 by destination AS 106 will be described with reference to FIG. 3.

In one example, at S200, destination AS 106 detects a presence of device 108 therein based on signaling received from device 108 requesting attachment to destination AS 106.

At S202, device 108 generates a signalization packet that can include, among other information, prefix information of device 108.

At S204, device 108 sends the signalization packet to BGP router 106-1 of AS 106.

At S206, BGP router 106-1 forwards the signalization packet to previous AS to which device 108 was attached (intermediate AS 104 in this case), which is received at BGP router 104-2 of AS 104. In one example and when multiple intermediate ASs exist, then S206 is repeated by each intermediate AS.

At S208, AS 104, via BGP router 104-1, forwards the signalization packet to BGP router 102-1 of home AS 102.

In one example, the forwarding at S206 and S208 uses an existing forwarding plane. For instance, if device 108 has prefix p, the signalization packet can be a special Internet Control Message Protocol (ICMP) packet addressed to p::0, which means that destination AS 106 does not need prior knowledge of which entity in home node AS 102 is performing validation of the mobility of device 108 as long as the corresponding keying information is trusted.

Upon receiving the signalization packet, at S210, home AS 102 (via one or more components thereof in charge of authenticating connected devices such as an AMF when home AS 102 is a 5G cellular network), validates (verifies) the prefix of device 108 included in the signalization packet.

If the prefix is not validated, home AS 102 generates and sends a packet that denies the prefix of device 108 mobility, no forwarding route is created and device 108 is denied access to destination AS 106.

If the prefix is validated at S210, then at S212, home AS 102 generates an authorization data packet. Thereafter, at S214, home AS 102 sends the authorization data packet, via BGP router 102-1, towards BGP router 104-1 of intermediate AS 104.

At S216, intermediate AS 104 creates a new steering rule (or updates an existing steering rule) at BGP routers 104-1 and/or 104-2 to steer any traffic destined for device 108's prefix to AS 102. When multiple intermediate ASs exist, S214 may be performed by each intermediate AS.

As mentioned above, the process of FIG. 2 provides a two-step solution for anchorless mobility management, where the first step focuses on inter-domain mobility (between two or more different ASs) and the second step focuses on intra-domain mobility (within a given AS).

Each given AS can have multiple BGP routers. For example, intermediate AS 104 has BGP routers 104-1 and 104-2. When data destined for device 108 is received at intermediate AS 104, intermediate AS 104 can internally configure its routing scheme to make sure that the request is sent to the correct BGP router of intermediate AS 104. For example, when data destined for device 108 is received at intermediate AS 104, intermediate AS 104 can have an internal configuration that can ensure the request is sent to BGP router 104-2 for transmission to destination AS 106. This is an example of intra-domain mobility management mentioned above.

Accordingly, at S216 and upon creating a steering rule at an intermediate AS such as intermediate AS 104, intermediate AS 104 implements an intra-domain mobility management to reconfigure its routing to route any packet or data destined for device 108 to the correct BGP router. When multiple intermediate ASs exist, intra-domain mobility management is performed by each intermediate AS. Intra-domain mobility management of S216 may be performed as follows.

In one example, all BGP routers of an AS such as BGP router 104-1 and 104-2 of intermediate AS 104 can consider the created steering rule as a BGP rule and use known internal BGP (iBGP) to determine the forwarding path for device 108. One advantage of relying on iBGP is the minimal overhead due to application of path steering rules to the BGP routers of an intermediate AS only.

In another example of intra-domain mobility management, software-defined networking (SDN) can be used by each intermediate AS (such as intermediate AS 104). Utilization of SDN for intra-domain mobility can be done according to the following steps. First, upon reception of the signalization packet generated and transmitted by device 108 (e.g., at S206), BGP router 104-2 of intermediate AS 104 forwards the signalization packet to an SDN controller of intermediate AS 104. Second, SDN controller of intermediate AS 104 instructs BGP router 104-1 of intermediate AS 102 to forward the signalization packet towards the next AS (which in example of FIG. 2 would be home AS 102). Next, SDN controller of intermediate AS 104 instructs BGP router 104-1 to set up the steering rules for the producer's prefix (to ensure that any data destined for device 108 is sent to BGP router 104-2). Finally, SDN controller of intermediate AS 104 reconfigures the internal routing of intermediate AS 104 accordingly to reflect to the correct/updated steering rules.

In one example and in case of using SDN for intra-domain mobility management, S218 may be performed (by each intermediate AS) after S206 instead of after S216.

At S220, intermediate AS 104, via BGP router 104-2, forwards the authorization data packet to BGP router 106-1 of destination AS 106.

Upon receiving the authorization data packet, at S222, destination AS 106 creates/updates a path steering rule at BGP router 106-1 in a similar manner as described above with respect to AS 104 at S214. Accordingly, a path from home AS 102 to destination AS 106 is created for device 108 such that any communication or data packets destined for device 108 that are received at home AS 102 are steered toward the destination AS 106 using the created steering rule. Furthermore, any communication or data packet destined for device 108 that is not first received at home AS 102 but instead is received at intermediate AS 104 will be directly steered to destination AS 106 without being redirected to home AS 102 first.

Thereafter, at S224, any communication or data packets (traffic) destined for device 108 is forwarded to device 108 using traffic steering rules created at each AS in setting 100.

In one example, path steering of traffic using created steering rules can be realized via techniques such as SRv6, Multi-Protocol Label Switching (MPLS) or MPLS-Segment Routing (MPLS-SR).

One or more advantages of the process of FIG. 2 include limited control overhead (with respect to, for example, encoding each mobility event directly in BGP tables of each AS), limited stretch of the redirection path (compared to tunnel-based solutions like MIPv6 and PMIPv6) and the distributed, anchorless nature of the process which does not require any anchor or mapping services as required in ID/Loc Split solutions.

As mentioned above, device 108 may have multiple interfaces each for connecting to a different network. For example, a laptop can be connected to both a local area network and a virtual private network (VPN) or a mobile device can be simultaneously connected to a 4G/LTE network as well as a WiFi network. Accordingly, device 108 can have multiple physical interfaces, each being used for connecting to a different type of network. This may be referred to as a multi-homed device.

There may be situations, in which a device may move from one AS to another on one interface but remain on the same AS for another interface. For example, a mobile device can remain on the same 4G/LTE AS but move across multiple WiFi connections (e.g., from an enterprise network of a corporation at which a user of device 108 is employed to a WiFi network of a nearby coffee shop). Given that device 108 has a single network identifier, there is a problem of determining which interfaces of device 108 have moved across multiple ASs and which interfaces have remained within the same AS.

In one example and in order to address the multi-homing issue, a network component of an AS (e.g., home AS 102) to which device 108 is attached can assign an identifier to each interface of device 108. For example, AS 102 may be an Information Centric Network (ICN) or a Hybrid ICN. Therefore such network component can be the Forwarding Information Base (FIB) of such ICN/HICN. In another example, AS 102 can be an enterprise network and thus the network component can be a Location/ID Separation Protocol (LISP) map server.

In one example, the identifier assigned to each interface can be an integer. The network component can then incorporate the identifier into the forwarding plane using a bitmap for each interface of device 108. For example, bitmap (m, b_i), where m is the integer assigned to an interface and b_i can be either 0 or 1. When b_i=1, it indicates that interface "m" is available for the device, and when b_i=0, it indicates that interface "m" is not available. When device 108 moves from home AS 102 to intermediate AS 104, the process of FIG. 2 is applied to only those interface(s) of device 108 for which the corresponding b_i number is 1.

The used bitmaps can provide the advantage of being a compact structure allowing to carry several updates in a single control message, and efficient processing on forwarding nodes (BGP routers).

In one example, an enhanced version of such a bitmap scheme may use bloom filters instead of bitmaps, which would allow assigning more complex values to interfaces, such as cryptographic identifiers, as opposed to integers.

Another aspect of the present disclosure addresses security issues involved in mobility of device 108 across multiple ASs. When device 108 attaches to a new AS, device 108 is required to "prove" to the new AS that it is allowed to connect and use some of its resources (and eventually have guarantees about identity, billing, etc.). In other words, device 108 is required to prove to the new AS its ownership of the prefix assigned thereto.

FIG. 3 illustrates an example authentication process for anchorless mobility across multiple networks, according to an aspect of the present disclosure.

Assuming that device 108 is on home node AS 102 and has not moved to any other AS, at S300, device 108 receives a network prefix, a security token (Sp) derived from the network prefix and a private key (Kp) from home AS 102. The network prefix, the security token and the private key may be generated and assigned to device 108 according to any known or to be developed method. For example, Kp can be one for use with BGP secure routing mechanism (BGPSec) and Sp can be given by Sp = H( Kp | p), where H is a cryptographic hash function.

At S302, device 108 generates a hash chain using Sp, which can be used by device 108 to prove prefix ownership at each subsequently visited AS. The generated hash chain (HC) can have the following format: HC = [Sp, h(Sp), h(h(Sp)) = h^(2)(Sp), ..., h^(k)(Sp), ..., h^(M)(Sp) ]. In one example, every time device 108 visits a new AS, device 108 can use one element (e.g., the rightmost element) in HC (one token in the HC) to prove prefix ownership to the newly visited AS. In one example, once an element in HC is used, it is removed from HC. Accordingly, at some point, HC elements will be used up entirely and exhausted. In such case, device 108 can generate a new HC from its home authority. Knowledge of the next tokens/elements of the HC is a proof that the same device 108 generated all the updates, thus creating a security chain.

At S304, device 108 moves (roams or attaches) to a new AS (e.g., destination AS 106 after passing through or temporarily visiting intermediate node AS 104). At S306, device 108 retrieves (selects) one element/token (e.g., the rightmost element) from the HC generated at S302 (e.g., HC(k)=h^(k)(Sp)) and includes the same in a signalization packet to be sent back to home AS 102. The signalization packet and its generation have been described above with reference to FIG. 2 (e.g., S202).

Thereafter, at S308, steps S202-S220 of FIG. 2 are repeated, the discussion of which is omitted here for sake of brevity. As part of this process, when home AS 102 receives the signalization packet and as part of validating the same, home AS 102 receives HC(k). Home AS 102 can thus use it to verify the token sent by device 108 by checking whether h(HC(k)) = HC(K+1) through a single hash computation. If successful, home AS 102 generates the authentication data packet described above with reference to FIG. 2 and can include a hash verification result by signing the authentication data packet (e.g., signed with S), which can be verified by all involved BGP routers of ASs involved based again on mechanisms similar to BGPSec, and enforce the update. Moreover, home AS 102 can mark HC(k) as used for considering invalid any subsequent received signalization packet containing HC(k).

According to the process of FIG. 3, a visited AS can only keep transient state for the prefixes it is serving during the time corresponding device(s) is/are attached to it. Such visited AS can discard this state as soon as it has sent a reply back to the next AS visited by the same device(s).

With reference to the mobility management process of FIG. 2, examples were described for anchorless mobility management per-interface of a device, where the device may move across ASs with respect to one interface but not others. This per-interface concept is equally applicable to the security aspect of providing ownership to any new AS when a particular interface of device 108 moves across an AS. The same interface identifiers and bitmaps described above can be used to determine which interfaces have moved and subsequently carry out the process of FIG. 3 for providing prefix ownership to any new AS but a moved interface of device 108.

Having described example embodiments for anchorless mobility management across different ASs, the disclosure now turns to discussion of example devices that can be used as components for mobility management including device 108, BGP routers, management components within each AS (e.g., a LISP map server, a FIB, etc.).

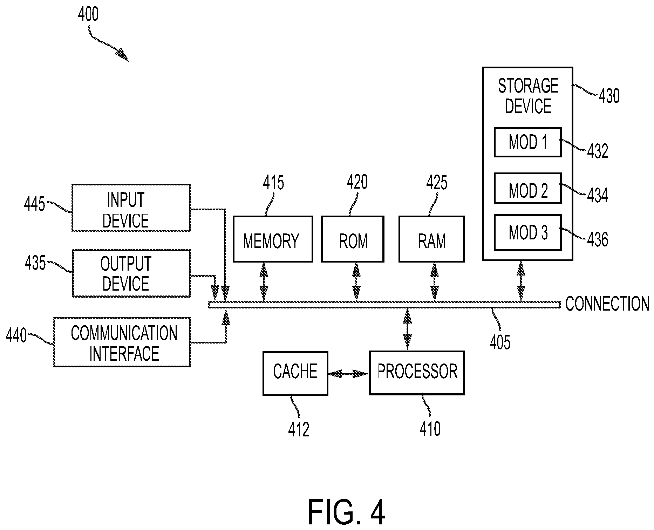

FIG. 4 illustrates computing system architecture for use in setting of FIG. 1, according to an aspect of the present disclosure. Computing system architecture (device) 400 has components that are in electrical communication with each other using a system connection 405, such as a bus. Exemplary system 400 includes a processing unit (CPU or processor) 410 and a system connection 405 that couples various system components including the system memory 415, such as read only memory (ROM) 420 and random access memory (RAM) 425, to the processor 410. The system 400 can include a cache of high-speed memory connected directly with, in close proximity to, or integrated as part of the processor 410. The system 400 can copy data from the system memory 415 and/or the storage device 430 to the cache 412 for quick access by the processor 410. In this way, the cache can provide a performance boost that avoids processor 410 delays while waiting for data. These and other modules can control or be configured to control the processor 410 to perform various actions. Other system memory 415 may be available for use as well. The system memory 415 can include multiple different types of memory with different performance characteristics. The processor 410 can include any general purpose processor and a hardware or software service, such as service 1 432, service 2 434, and service 3 436 stored in storage device 430, configured to control the processor 410 as well as a special-purpose processor where software instructions are incorporated into the actual processor design. The processor 410 may be a completely self-contained computing system, containing multiple cores or processors, a bus, memory controller, cache, etc. A multi-core processor may be symmetric or asymmetric.

To enable user interaction with the computing device 400, an input device 445 can represent any number of input mechanisms, such as a microphone for speech, a touch-sensitive screen for gesture or graphical input, keyboard, mouse, motion input, speech and so forth. An output device 435 can also be one or more of a number of output mechanisms known to those of skill in the art. In some instances, multimodal systems can enable a user to provide multiple types of input to communicate with the computing device 400. The communications interface 440 can generally govern and manage the user input and system output. There is no restriction on operating on any particular hardware arrangement and therefore the basic features here may easily be substituted for improved hardware or firmware arrangements as they are developed.

Storage device 430 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 425, read only memory (ROM) 420, and hybrids thereof.

The storage device 430 can include services 432, 434, 436 for controlling the processor 410. Other hardware or software modules are contemplated. The storage device 430 can be connected to the system connection 405. In one aspect, a hardware module that performs a particular function can include the software component stored in a computer-readable medium in connection with the necessary hardware components, such as the processor 410, system connection 405, output device 435, and so forth, to carry out the function.

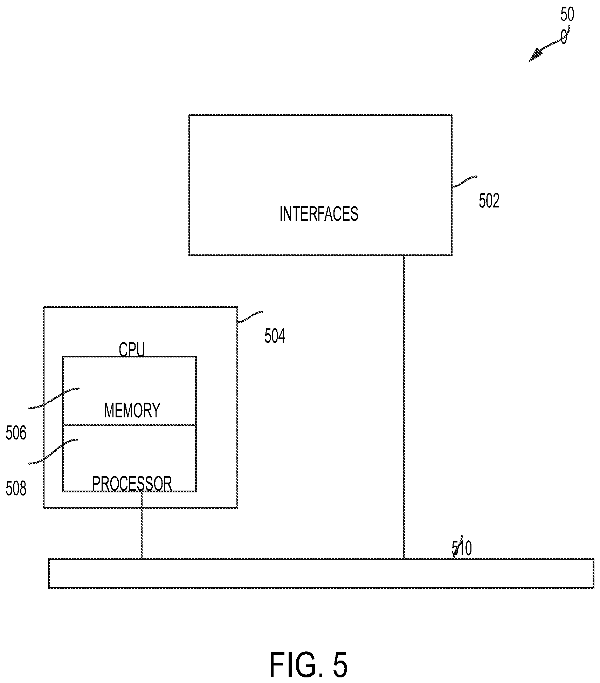

FIG. 5 illustrates an example network device suitable for performing switching, routing, load balancing, and other networking operations, according to an aspect of the present disclosure. Network device 500 includes a central processing unit (CPU) 504, interfaces 502, and a bus 510 (e.g., a PCI bus). When acting under the control of appropriate software or firmware, the CPU 504 is responsible for executing packet management, error detection, and/or routing functions. The CPU 504 preferably accomplishes all these functions under the control of software including an operating system and any appropriate applications software. CPU 504 may include one or more processors 508, such as a processor from the INTEL X86 family of microprocessors. In some cases, processor 508 can be specially designed hardware for controlling the operations of network device 500. In some cases, a memory 506 (e.g., non-volatile RAM, ROM, etc.) also forms part of CPU 504. However, there are many different ways in which memory could be coupled to the system.

The interfaces 502 are typically provided as modular interface cards (sometimes referred to as "line cards"). Generally, they control the sending and receiving of data packets over the network and sometimes support other peripherals used with the network device 500. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces, WIFI interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM. The independent processors may control such communications intensive tasks as packet switching, media control, signal processing, crypto processing, and management. By providing separate processors for the communications intensive tasks, these interfaces allow the CPU 504 to efficiently perform routing computations, network diagnostics, security functions, etc.

Although the system shown in FIG. 5 is one specific network device of the present invention, it is by no means the only network device architecture on which the present invention can be implemented. For example, an architecture having a single processor that handles communications as well as routing computations, etc., is often used. Further, other types of interfaces and media could also be used with the network device 500.

Regardless of the network device's configuration, it may employ one or more memories or memory modules (including memory 506) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 506 could also hold various software containers and virtualized execution environments and data.

The network device 500 can also include an application-specific integrated circuit (ASIC), which can be configured to perform routing and/or switching operations. The ASIC can communicate with other components in the network device 500 via the bus 510, to exchange data and signals and coordinate various types of operations by the network device 500, such as routing, switching, and/or data storage operations, for example.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information is used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" refers to at least one of a set and indicates that one member of the set or multiple members of the set satisfy the claim. For example, claim language reciting "at least one of A and B" means A, B, or A and B.

## Claims

1. An anchorless mobility management method comprising:
detecting (S200), at a destination autonomous system (106), AS, a presence of a device (108) within the destination AS, the destination AS being configured to provide network connectivity to devices connected thereto using a radio access technology;
receiving (S204), at the destination AS, a signalization packet from the device to be sent (S206, S208) to a home AS (102) to validate a prefix of the device, the home AS being an AS to which the device was attached at a first time prior to attaching to the destination AS at a second time;
upon validating the prefix at the home AS, creating (S216) a corresponding traffic steering rule for the device at one or more intermediate ASs (104) to which the device was attached between the first time and the second time; and
forwarding (S224) traffic that is received at the home AS and destined for the device, to the destination AS using the corresponding traffic steering rule at each of the one or more intermediate ASs,
wherein each of the destination AS, the home AS and the one or more intermediate ASs is an independent AS, and
wherein the destination AS, the home AS, and the one or more intermediate ASs operate based on the same radio access technology while belonging to different domains.

2. The anchorless mobility management method of claim 1, further comprising:
validating (S210) the prefix at the home AS; and
generating (S212) an authorization data packet indicating the validation.

3. The anchorless mobility management method of claim 1 or claim 2, further comprising:
forwarding (S214, S220) the authorization data packet to the destination AS via the one or more intermediate ASs, wherein each intermediate AS creates the corresponding traffic steering rule based on information included in the authorization data packet.

4. The anchorless mobility management method of any preceding claim, wherein the signalization packet includes a hash element of a hash chain created by the device, the hash element being used to validate ownership of the prefix to the destination AS when the devices attaches to the destination AS and optionally wherein the hash chain is created by the device at the first time when the device is attached to the home AS and based on the prefix, a security token and private key assigned to the device by the home AS.

5. The anchorless mobility management method of any preceding claim, further comprising:
performing (S218) an intra-domain mobility management at each of the one or more intermediate ASs to identify a border router at each of the one or more intermediate ASs to direct the traffic thereto to be forwarded to the device in the destination AS.

6. The anchorless mobility management method of any preceding claim, wherein
the device has multiple interfaces, each of the multiple interfaces being used for attaching to a different network operating based on a different radio access technology; and
the device attaches to the destination AS on a first interface and remains on the home AS on a second interface,
and optionally wherein the anchorless mobility management is performed on a per interface basis.

7. The anchorless mobility management method of claim 6, further comprising:
assigning an identifier to each of the multiple interfaces to differentiate between the first interface and the second interface of the device.

8. A system, comprising:
a destination autonomous system (106), AS, configured to provide network connectivity to devices connected thereto using a radio access technology, the destination AS comprising one or more processors configured to execute computer-readable instructions to:
detect (S200) a device (108) attached to the destination AS;
receive (S204) a signalization packet from the device to be sent (S206, S208) to a home AS (102) of the device to validate a prefix of the device, the home AS being an AS to which the device was previously attached;
receive (S220) an authorization data packet for the device indicating that the prefix is validated;
record (S222) a path steering rule according to which traffic destined for the device is steered to the destination AS from the home AS or any other intermediate AS (104) visited by the device prior to being attached to the destination AS,
wherein each of the destination AS, the home AS, and the any other intermediate AS is an independent AS, and
wherein the destination AS, the home AS, and the any other intermediate AS operate based on the same radio access technology while belonging to different domains.

9. The system of claim 8, further comprising:
at least one intermediate AS (104) configured to create (S216) a traffic steering rule for steering the traffic to the destination AS, upon receiving (S214) the authorization data packet, and optionally wherein the at least one intermediate AS is configured to perform (S218) an intra-domain mobility management to identify a border router for directing the traffic thereto to be steered to the destination AS.

10. The system of any of claims 8 or 9, wherein the signalization packet includes a hash element of a hash chain created by the device, the hash element being used to validate ownership of the prefix to the destination AS when the devices attaches to the destination AS, and optionally wherein the hash chain is created by the device when the device is attached to the home AS and based on the prefix, a security token and private key assigned to the device by the home AS.

11. One or more computer-readable medium having computer-readable instructions stored therein for anchorless management of mobility of a device (108), wherein execution of the computer-readable instructions by one or more processors of a destination autonomous system (106), AS, configure the destination AS to:
detect (S200) a device (108) attached to the destination AS;
receive (S204) a signalization packet from the device to be sent (S206, S208) to a home AS (102) of the device to validate a prefix of the device, the home AS being an AS to which the device was previously attached;
receive (S220) an authorization data packet for the device indicating that the prefix is validated; and
record (S222) a path steering rule according to which traffic destined for the device is steered to the destination AS from the home AS or any other intermediate AS (104) visited by the device prior to being attached to the destination AS,
wherein each of the destination AS, the home AS, and the any other intermediate AS is an independent AS, and
wherein the destination AS, the home AS, and the any other intermediate AS operate based on the same radio access technology while belonging to different domains.

12. The one or more computer-readable medium of claim 11, wherein the execution of the computer-readable instructions by one or more processors of an intermediate AS (104) configure the intermediate AS to:
create (S216) a traffic steering rule for steering the traffic to the destination AS, upon receiving (S214) the authorization data packet; and
forward (S220) the authorization data packet to at least one of a next intermediate AS (104) or the destination AS.

13. The one or more computer-readable medium of claim 12, wherein the execution of the computer-readable instructions by one or more processors of the intermediate AS configure the intermediate AS to:
perform (S218) an intra-domain mobility management at the intermediate AS to identify a border router at the intermediate AS to direct the traffic thereto to be forwarded to the destination AS.

14. The one or more computer-readable medium of claim 11, wherein the execution of the computer-readable instructions by one or more processors of the home AS, configure the home AS to:
receive (S208) the signalization packet;
validate (S210) the signalization packet; and
generate (S212) the authorization data packet.

15. The one or more computer-readable medium of claim 14, wherein
the signalization packet includes a hash element of a hash chain created by the device, the hash element being used to validate ownership of the prefix to the destination AS when the devices attaches thereto; and
the hash chain is created by the device when the device is attached to the home AS and based on the prefix, a security token and private key assigned to the device by the home AS.

## Patentansprüche

1. Verfahren zum ankerlosen Mobilitätsmanagement, umfassend:
Detektieren (S200), an einem autonomen Ziel-System (106), AS, einer Anwesenheit einer Vorrichtung (108) innerhalb des Ziel-AS, wobei das Ziel-AS eingerichtet ist, um Vorrichtungen, die daran angebunden sind, unter Verwendung einer Funkzugangstechnologie Netzwerkkonnektivität bereitzustellen;
Empfangen (S204), an dem Ziel-AS, eines Signalisierungspakets von der Vorrichtung, das an ein Heimat-AS (102) zu senden ist (S206, S208), um ein Präfix der Vorrichtung zu validieren, wobei das Heimat-AS ein AS ist, an das die Vorrichtung zu einem ersten Zeitpunkt vor dem Anbinden an das Ziel-AS zu einem zweiten Zeitpunkt angebunden war;
nach dem Validieren des Präfixes an dem Heimat-AS, Erzeugen (S216) einer entsprechenden Verkehrssteuerungsregel für die Vorrichtung an einem oder mehreren Zwischen-ASs (104), an die die Vorrichtung zwischen dem ersten Zeitpunkt und dem zweiten Zeitpunkt angebunden war; und
Weiterleiten (S224) von Verkehr, der an dem Heimat-AS empfangen wird und für die Vorrichtung bestimmt ist, an das Ziel-AS unter Verwendung der entsprechenden Verkehrssteuerungsregel an jedem des einen oder der mehreren Zwischen-ASs,
wobei jedes des Ziel-AS, des Heimat-AS und des einen oder der mehreren Zwischen-ASs ein unabhängiges AS ist, und
wobei das Ziel-AS, das Heimat-AS und das eine oder die mehreren Zwischen-ASs basierend auf der gleichen Funkzugangstechnologie arbeiten, während sie zu unterschiedlichen Domänen gehören.

2. Verfahren zum ankerlosen Mobilitätsmanagement nach Anspruch 1, ferner umfassend:
Validieren (S210) des Präfixes an dem Heimat-AS; und
Erzeugen (S212) eines Autorisierungsdatenpakets, das die Validierung anzeigt.

3. Verfahren zum ankerlosen Mobilitätsmanagement nach Anspruch 1 oder Anspruch 2, ferner umfassend:
Weiterleiten (S214, S220) des Autorisierungsdatenpakets an das Ziel-AS über das eine oder die mehreren Zwischen-ASs, wobei jedes Zwischen-AS die entsprechende Verkehrssteuerungsregel basierend auf Informationen erzeugt, die in dem Autorisierungsdatenpaket enthalten sind.

4. Verfahren zum ankerlosen Mobilitätsmanagement nach einem vorhergehenden Anspruch, wobei das Signalisierungspaket ein Hash-Element einer durch die Vorrichtung erzeugten Hash-Kette beinhaltet, wobei das Hash-Element verwendet wird, um die Inhaberschaft des Präfixes gegenüber dem Ziel-AS zu validieren, wenn die Vorrichtung sich an das Ziel-AS anbindet, und wobei optional die Hash-Kette durch die Vorrichtung zu dem ersten Zeitpunkt erzeugt wird, wenn die Vorrichtung an das Heimat-AS angebunden ist, und basierend auf dem Präfix, einem Sicherheitstoken und einem privaten Schlüssel, die der Vorrichtung durch das Heimat-AS zugewiesen sind.

5. Verfahren zum ankerlosen Mobilitätsmanagement nach einem vorhergehenden Anspruch, ferner umfassend:
Durchführen (S218) eines Intra-Domänen-Mobilitätsmanagements an jedem des einen oder der mehreren Zwischen-ASs, um einen Border-Router an jedem des einen oder der mehreren Zwischen-ASs zu identifizieren, um den Verkehr dorthin zu leiten, damit er an die Vorrichtung in dem Ziel-AS weitergeleitet wird.

6. Verfahren zum ankerlosen Mobilitätsmanagement nach einem vorhergehenden Anspruch, wobei
die Vorrichtung mehrere Schnittstellen aufweist, wobei jede der mehreren Schnittstellen zum Anbinden an ein unterschiedliches Netzwerk verwendet wird, das basierend auf einer unterschiedlichen Funkzugangstechnologie operiert; und
die Vorrichtung sich an das Ziel-AS auf einer ersten Schnittstelle anbindet und an dem Heimat-AS auf einer zweiten Schnittstelle verbleibt,
und wobei optional das ankerlose Mobilitätsmanagement pro Schnittstelle durchgeführt wird.

7. Verfahren zum ankerlosen Mobilitätsmanagement nach Anspruch 6, ferner umfassend:
Zuweisen eines Identifikators zu jeder der mehreren Schnittstellen, um zwischen der ersten Schnittstelle und der zweiten Schnittstelle der Vorrichtung zu unterscheiden.

8. System, umfassend:
ein autonomes Ziel-System (106), AS, das eingerichtet ist, um Vorrichtungen, die daran angebunden sind, unter Verwendung einer Funkzugangstechnologie Netzwerkkonnektivität bereitzustellen, wobei das Ziel-AS einen oder mehrere Prozessoren umfasst, die eingerichtet sind, um computerlesbare Anweisungen auszuführen zum:
Detektieren (S200) einer Vorrichtung (108), die an das Ziel-AS angebunden ist;
Empfangen (S204) eines Signalisierungspakets von der Vorrichtung, das an ein Heimat-AS (102) der Vorrichtung zu senden ist (S206, S208), um ein Präfix der Vorrichtung zu validieren, wobei das Heimat-AS ein AS ist, an das die Vorrichtung zuvor angebunden war;
Empfangen (S220) eines Autorisierungsdatenpakets für die Vorrichtung, das anzeigt, dass das Präfix validiert ist;
Aufzeichnen (S222) einer Pfadsteuerungsregel, gemäß der Verkehr, der für die Vorrichtung bestimmt ist, zu dem Ziel-AS von dem Heimat-AS oder jeglichem anderen Zwischen-AS (104), das durch die Vorrichtung besucht wurde, bevor sie an das Ziel-AS angebunden wurde, gesteuert wird,
wobei jedes des Ziel-AS, des Heimat-AS und des jeglichen anderen Zwischen-ASs ein unabhängiges AS ist, und
wobei das Ziel-AS, das Heimat-AS und das jegliche andere Zwischen-AS basierend auf der gleichen Funkzugangstechnologie arbeiten, während sie zu unterschiedlichen Domänen gehören.

9. System nach Anspruch 8, ferner umfassend:
mindestens ein Zwischen-AS (104), das eingerichtet ist, um, nach Empfangen (S214) des Autorisierungsdatenpakets, eine Verkehrssteuerungsregel zum Steuern des Verkehrs zu dem Ziel-AS zu erzeugen (S216), und wobei optional das mindestens eine Zwischen-AS eingerichtet ist, um ein Intra-Domänen-Mobilitätsmanagement durchzuführen (S218), um einen Border-Router zu identifizieren, um den Verkehr dorthin zu leiten, damit er zu dem Ziel-AS gesteuert wird.

10. System nach einem der Ansprüche 8 oder 9, wobei das Signalisierungspaket ein Hash-Element einer durch die Vorrichtung erzeugten Hash-Kette beinhaltet, wobei das Hash-Element verwendet wird, um die Inhaberschaft des Präfixes gegenüber dem Ziel-AS zu validieren, wenn die Vorrichtung sich an das Ziel-AS anbindet, und wobei optional die Hash-Kette durch die Vorrichtung erzeugt wird, wenn die Vorrichtung an das Heimat-AS angebunden ist, und basierend auf dem Präfix, einem Sicherheitstoken und einem privaten Schlüssel, die der Vorrichtung durch das Heimat-AS zugewiesen sind.

11. Ein oder mehrere computerlesbare Medien, die computerlesbare Anweisungen darin gespeichert aufweisen, für ein ankerloses Management von Mobilität einer Vorrichtung (108), wobei eine Ausführung der computerlesbaren Anweisungen durch einen oder mehrere Prozessoren eines autonomen Ziel-Systems (106), AS, das Ziel-AS einrichtet zum:
Detektieren (S200) einer Vorrichtung (108), die an das Ziel-AS angebunden ist;
Empfangen (S204) eines Signalisierungspakets von der Vorrichtung, das an ein Heimat-AS (102) der Vorrichtung zu senden ist (S206, S208), um ein Präfix der Vorrichtung zu validieren, wobei das Heimat-AS ein AS ist, an das die Vorrichtung zuvor angebunden war;
Empfangen (S220) eines Autorisierungsdatenpakets für die Vorrichtung, das anzeigt, dass das Präfix validiert ist; und
Aufzeichnen (S222) einer Pfadsteuerungsregel, gemäß der Verkehr, der für die Vorrichtung bestimmt ist, zu dem Ziel-AS von dem Heimat-AS oder jeglichem anderen Zwischen-AS (104), das durch die Vorrichtung besucht wurde, bevor sie an das Ziel-AS angebunden wurde, gesteuert wird,
wobei jedes des Ziel-AS, des Heimat-AS und des jeglichen anderen Zwischen-ASs ein unabhängiges AS ist, und
wobei das Ziel-AS, das Heimat-AS und das jegliche andere Zwischen-AS basierend auf der gleichen Funkzugangstechnologie arbeiten, während sie zu unterschiedlichen Domänen gehören.

12. Ein oder mehrere computerlesbare Medien nach Anspruch 11, wobei die Ausführung der computerlesbaren Anweisungen durch einen oder mehrere Prozessoren eines Zwischen-AS (104) das Zwischen-AS einrichtet zum:
Erzeugen (S216) einer Verkehrssteuerungsregel zum Steuern des Verkehrs zu dem Ziel-AS, nach Empfangen (S214) des Autorisierungsdatenpakets; und
Weiterleiten (S220) des Autorisierungsdatenpakets an mindestens eines von einem nächsten Zwischen-AS (104) oder dem Ziel-AS.

13. Ein oder mehrere computerlesbare Medien nach Anspruch 12, wobei die Ausführung der computerlesbaren Anweisungen durch einen oder mehrere Prozessoren des Zwischen-AS das Zwischen-AS einrichtet zum:
Durchführen (S218) eines Intra-Domänen-Mobilitätsmanagements an dem Zwischen-AS, um einen Border-Router an dem Zwischen-AS zu identifizieren, um den Verkehr dorthin zu leiten, damit er an das Ziel-AS weitergeleitet wird.

14. Ein oder mehrere computerlesbare Medien nach Anspruch 11, wobei die Ausführung der computerlesbaren Anweisungen durch einen oder mehrere Prozessoren des Heimat-AS das Heimat-AS einrichtet zum:
Empfangen (S208) des Signalisierungspakets;
Validieren (S210) des Signalisierungspakets; und
Erzeugen (S212) des Autorisierungsdatenpakets.

15. Ein oder mehrere computerlesbare Medien nach Anspruch 14, wobei
das Signalisierungspaket ein Hash-Element einer durch die Vorrichtung erzeugten Hash-Kette beinhaltet, wobei das Hash-Element verwendet wird, um die Inhaberschaft des Präfixes gegenüber dem Ziel-AS zu validieren, wenn die Vorrichtung sich daran anbindet; und
die Hash-Kette durch die Vorrichtung erzeugt wird, wenn die Vorrichtung an das Heimat-AS angebunden ist, und basierend auf dem Präfix, einem Sicherheitstoken und einem privaten Schlüssel, die der Vorrichtung durch das Heimat-AS zugewiesen sind.

## Revendications

1. Procédé de gestion de la mobilité sans ancrage, ledit procédé comprenant :
la détection (S200), au niveau d'un système autonome, AS, de destination (106), d'une présence d'un dispositif (108) au sein de l'AS de destination, l'AS de destination étant configuré pour fournir une connectivité réseau à des dispositifs connectés audit système autonome, en utilisant une technologie d'accès radio ;
la réception (S204), au niveau de l'AS de destination, d'un paquet de signalisation provenant du dispositif devant être envoyé (S206, 5208) à un AS d'origine (102), afin de valider un préfixe du dispositif, l'AS d'origine étant un AS auquel le dispositif a été connecté une première fois, avant d'être connecté, une seconde fois, à l'AS de destination ;
au moment de la validation du préfixe au niveau de l'AS d'origine, le procédé comprend la création (S216) d'une règle correspondante d'orientation du trafic pour le dispositif au niveau d'un ou de plusieurs AS intermédiaires (104) auxquels le dispositif a été connecté entre la première fois et la seconde fois ; et
le transfert (S224), vers l'AS de destination, du trafic qui est reçu au niveau de l'AS d'origine et destiné au dispositif, en utilisant la règle correspondante d'orientation du trafic au niveau de chacun de ceux parmi l'un ou plusieurs des AS intermédiaires,
procédé dans lequel chacun de ceux parmi l'AS de destination, l'AS d'origine et l'un ou plusieurs des AS intermédiaires est un AS indépendant, et
procédé dans lequel l'AS de destination, l'AS d'origine et l'un ou plusieurs des AS intermédiaires fonctionnent sur la base de la même technologie d'accès radio, tout en appartenant à des domaines différents.

2. Procédé de gestion de la mobilité sans ancrage selon la revendication 1, ledit procédé comprenant en outre :
la validation (S210) du préfixe au niveau de l'AS d'origine ; et
le fait de générer (S212) un paquet de données d'autorisation indiquant la validation.

3. Procédé de gestion de la mobilité sans ancrage selon la revendication 1 ou la revendication 2, ledit procédé comprenant en outre :
le transfert (S214, S220) du paquet de données d'autorisation vers l'AS de destination via l'un ou plusieurs des AS intermédiaires, procédé dans lequel chaque AS intermédiaire crée la règle correspondante d'orientation du trafic, ladite règle étant basée sur des informations contenues dans le paquet de données d'autorisation.

4. Procédé de gestion de la mobilité sans ancrage selon l'une quelconque des revendications précédentes, procédé dans lequel le paquet de signalisation comprend un élément de hachage d'une chaîne de hachage créée par le dispositif, l'élément de hachage étant utilisé pour valider la propriété du préfixe auprès de l'AS de destination, lorsque le dispositif se connecte à l'AS de destination, et éventuellement procédé dans lequel la chaîne de hachage est créée par le dispositif la première fois lorsque le dispositif est connecté à l'AS d'origine et basé sur le préfixe, un jeton de sécurité et une clé privée, qui sont attribués au dispositif par l'AS d'origine.

5. Procédé de gestion de la mobilité sans ancrage selon l'une quelconque des revendications précédentes, ledit procédé comprenant en outre :
la mise en œuvre (S218) d'une gestion de la mobilité intra-domaine au niveau de chacun de ceux parmi l'un ou plusieurs des AS intermédiaires, afin d'identifier un routeur de bordure au niveau de chacun de ceux parmi l'un ou plusieurs des AS intermédiaires, pour que le trafic, qui est dirigé vers ledit routeur de bordure, soit transféré vers le dispositif situé dans l'AS de destination.

6. Procédé de gestion de la mobilité sans ancrage selon l'une quelconque des revendications précédentes, procédé dans lequel :
le dispositif a de multiples interfaces, chacune des interfaces multiples étant utilisée pour se connecter à un réseau différent dont le fonctionnement est basé sur une technologie d'accès radio différente ; et procédé dans lequel :
le dispositif se connecte à l'AS de destination sur une première interface et reste sur l'AS d'origine sur une deuxième interface,
et éventuellement procédé dans lequel la gestion de la mobilité sans ancrage est basée sur une mise en œuvre effectuée interface par interface.

7. Procédé de gestion de la mobilité sans ancrage selon la revendication 6, ledit procédé comprenant en outre :
l'attribution d'un identifiant à chacune des multiples interfaces, afin de faire une différenciation entre la première interface et la deuxième interface du dispositif.

8. système comprenant :
un système autonome, AS, de destination (106) configuré pour fournir une connectivité réseau à des dispositifs connectés audit système autonome, en utilisant une technologie d'accès radio, l'AS de destination comprenant un ou plusieurs processeurs configurés pour exécuter des instructions lisibles par ordinateur, afin :
de détecter (5200) un dispositif (108) connecté à l'AS de destination ;
de recevoir (S204) un paquet de signalisation provenant du dispositif devant être envoyé (S206, 5208) à un AS d'origine (102) du dispositif, afin de valider un préfixe du dispositif, l'AS d'origine étant un AS auquel le dispositif a été précédemment connecté ;
de recevoir (S220) un paquet de données d'autorisation pour le dispositif indiquant que le préfixe est validé ;
d'enregistrer (S222) une règle d'orientation de trajectoire, règle selon laquelle le trafic destiné au dispositif est orienté vers l'AS de destination à partir de l'AS d'origine ou de n'importe quel autre AS intermédiaire (104) ayant été visité par le dispositif avant d'être connecté à l'AS de destination,
système dans lequel chacun de ceux parmi l'AS de destination, l'AS d'origine et n'importe quel autre AS intermédiaire est un AS indépendant, et
système dans lequel l'AS de destination, l'AS d'origine et n'importe quel autre AS intermédiaire fonctionnent sur la base de la même technologie d'accès radio, tout en appartenant à des domaines différents.

9. système selon la revendication 8, comprenant en outre :
au moins un AS intermédiaire (104) configuré pour, au moment de la réception (S214) du paquet de données d'autorisation, créer (S216) une règle d'orientation du trafic afin d'orienter le trafic vers l'AS de destination, et éventuellement système dans lequel l'au moins un AS intermédiaire est configuré pour mettre en œuvre (S218) une gestion de la mobilité intra-domaine, afin d'identifier un routeur de bordure pour que le trafic, qui est dirigé vers ledit routeur de bordure, soit orienté vers l'AS de destination.

10. système selon l'une des revendications 8 ou 9, dans lequel le paquet de signalisation comprend un élément de hachage d'une chaîne de hachage créée par le dispositif, l'élément de hachage étant utilisé pour valider la propriété du préfixe auprès de l'AS de destination, lorsque le dispositif se connecte à l'AS de destination, et éventuellement système dans lequel la chaîne de hachage est créée par le dispositif lorsque le dispositif est connecté à l'AS d'origine et basé sur le préfixe, un jeton de sécurité et une clé privée, qui sont attribués au dispositif par l'AS d'origine.

11. Un ou plusieurs supports lisibles par ordinateur, ledit ou lesdits support(s) ayant des instructions, lisibles par ordinateur, qui y sont stockées pour la gestion sans ancrage de la mobilité d'un dispositif (108), support(s) dans lequel ou lesquels l'exécution des instructions, lisibles par ordinateur, par un ou plusieurs processeurs d'un système autonome, AS, de destination (106) configure l'AS de destination pour :
détecter (5200) un dispositif (108) connecté à l'AS de destination ;
recevoir (S204) un paquet de signalisation provenant du dispositif devant être envoyé (S206, 5208) à un AS d'origine (102) du dispositif, afin de valider un préfixe du dispositif, l'AS d'origine étant un AS auquel le dispositif a été précédemment connecté ;
recevoir (S220) un paquet de données d'autorisation pour le dispositif indiquant que le préfixe est validé ; et
enregistrer (S222) une règle d'orientation de trajectoire, règle selon laquelle le trafic destiné au dispositif est orienté vers l'AS de destination à partir de l'AS d'origine ou de n'importe quel autre AS intermédiaire (104) ayant été visité par le dispositif avant d'être connecté à l'AS de destination,
système dans lequel chacun de ceux parmi l'AS de destination, l'AS d'origine et n'importe quel autre AS intermédiaire est un AS indépendant, et
système dans lequel l'AS de destination, l'AS d'origine et n'importe quel autre AS intermédiaire fonctionnent sur la base de la même technologie d'accès radio, tout en appartenant à des domaines différents.

12. L'un ou plusieurs des supports lisibles par ordinateur selon la revendication 11, support(s) dans lequel ou lesquels l'exécution des instructions, lisibles par ordinateur, par un ou plusieurs processeurs d'un AS intermédiaire (104) configure l'AS intermédiaire pour :
au moment de la réception (S214) du paquet de données d'autorisation, créer (S216) une règle d'orientation du trafic pour orienter le trafic vers l'AS de destination ; et
transférer (S220) le paquet de données d'autorisation vers au moins l'un ou l'autre d'un AS intermédiaire suivant (104) ou de l'AS de destination.

13. L'un ou plusieurs des supports lisibles par ordinateur selon la revendication 12, support(s) dans lequel ou lesquels l'exécution des instructions, lisibles par ordinateur, par un ou plusieurs processeurs de l'AS intermédiaire configure l'AS intermédiaire pour :
mettre en œuvre (S218) une gestion de la mobilité intra-domaine au niveau de l'AS intermédiaire, afin d'identifier un routeur de bordure au niveau de l'AS intermédiaire pour que le trafic, qui est dirigé vers ledit routeur de bordure, soit transféré vers l'AS de destination.

14. L'un ou plusieurs des supports lisibles par ordinateur selon la revendication 11, support(s) dans lequel ou lesquels l'exécution des instructions, lisibles par ordinateur, par un ou plusieurs processeurs de l'AS d'origine configure l'AS d'origine pour :
recevoir (5208) le paquet de signalisation ;
valider (S210) le paquet de signalisation ; et
générer (S212) le paquet de données d'autorisation.

15. L'un ou plusieurs des supports lisibles par ordinateur selon la revendication 14, support(s) dans lequel ou lesquels :
le paquet de signalisation comprend un élément de hachage d'une chaîne de hachage créée par le dispositif, l'élément de hachage étant utilisé pour valider la propriété du préfixe auprès de l'AS de destination, lorsque le dispositif se connecte audit système autonome ; et
la chaîne de hachage est créée par le dispositif lorsque le dispositif est connecté à l'AS d'origine et basé sur le préfixe, un jeton de sécurité et une clé privée, qui sont attribués au dispositif par l'AS d'origine.
